# EUROPEAN PATENT SPECIFICATION

(11) **EP 2 640 953 B1**
(45) Date of publication and mention of the grant of the patent: **08.07.2020**
(21) Application number: 11840828.5
(22) Date of filing: 17.11.2011
(51) Int. Cl.: F02K 9/28, C06B 47/00

(54) **METHOD OF MANUFACTURING A ROCKET PROPELLANT**
VERFAHREN ZUR HERSTELLUNG EINER ANTRIEBSZUSAMMENSETZUNG
PROCÉDÉ DE FABRICATION DU PROPERGOL

(30) Priority: 19.11.2010 US 949980; 14.11.2011 US 201113295268
(43) Date of publication of application: 25.09.2013
(73) Proprietor: TOTAL MARKETING SERVICES, 92800 Puteaux (FR)
(72) Inventor: KELLY, Kevin, Friendswood TX 77546 (US)
(74) Representative: Hirsch & Associés
(86) International application number: PCT/US2011/061181
(87) International publication number: WO 2012/068369

(56) References cited:
- WO-A2-2010/033183
- US-A- 3 153 903
- US-A- 5 616 882
- US-A- 5 705 771
- US-A1- 2005 027 148
- N.N.: "MIL-DTL-25576D - Detail Specification - Propellant, Rocket Grade Kerosene", , 20 May 2005 (2005-05-20), XP055388988, Retrieved from the Internet: URL:https://propellants.ksc.nasa.gov/commo dities/specs/MIL_DTL_25576D.pdf [retrieved on 2017-07-07]

## Description

### FIELD

The present disclosure generally relates to propellant formulations. Specifically, the present disclosure relates to the combination of hydrocarbon streams to manufacture rocket propellant having specific characteristics.

### BACKGROUND

Currently, rocket propellant, in combination with liquid oxygen, is used as the propellant system in a large percentage of launch vehicles and rockets. For example, the document US 5 616 882A relates to a rocket propellant of improved specific impulse (Isp) and thrust obtained by mixing a rocket fuel of RP-1 with quadricyclane. Such mixture may be combined with an oxidizer (e.g. liquid oxygen).
However, supply is limited, resulting in little opportunity to optimize fuel formulations. Furthermore, limited supply results in little to no redundancy in supply in the event of supply shortages/failures.

Therefore, a need exists to develop alternative propellant formulations.

### SUMMARY

The present invention relates to a method of manufacturing a rocket propellant including combining at least two hydrocarbon fluids wherein at least one of the at least two hydrocarbon fluids contains more than 60 wt.% of isoparaffins, wherein the rocket propellant meets RP-1 specifications as reported by the United States Defense Department Specification MIL-DTL-25576E, dated April 14, 2006.

### BRIEF DESCRIPTION OF THE DRAWINGS

Figure 1 illustrates a traditionally manufactured RP-1 propellant distillation curve, wherein *T*_{(°C)} = (*T*_{(°F)} - 32) / 1.8.
Figure 2 illustrates distillation curves for blend stocks.
Figure 3 illustrates distillation curve data of formulated propellants.
Figure 4 illustrates density data for formulated propellants.
Figure 5 illustrates distillation curve data of blend stocks.
Figure 6 illustrates distillation curves of formulated propellants.
Figure 7 illustrates density data for formulated propellants.
Figure 8 illustrates weight savings of formulated propellants, wherein lpound =0.453 kg
Figure 9 illustrates hydrogen content for formulated propellants.
Figure 10 illustrates the net heat of combustion for formulated propellants wherein 1BTU/1b=0.002326 MJ/kg.
Figure 11 illustrates distillation curve data of formulated propellants.
Figure 12 illustrates distillation curves for formulated propellants and traditionally manufactured RP-1 propellant.

### DETAILED DESCRIPTION

### Introduction and Definitions

A detailed description will now be provided. The disclosure that follows includes specific embodiments, versions and examples, which are included to enable a person having ordinary skill in the art to make and use the methods and compositions of matter disclosed when the information in this disclosure is combined with available information and technology.

Various terms as used herein are shown below. To the extent a term used in a claim is not defined below, it should be given the broadest definition skilled persons in the pertinent art have given that term as reflected in printed publications and issued patents at the time of filing.

Further, various ranges and/or numerical limitations may be expressly stated below. It should be recognized that any ranges include iterative ranges of like magnitude falling within the expressly stated ranges or limitations.

A large percentage of those vehicles are launch vehicles and rockets, while additional vehicles include hypersonic space planes, such as those powered by ramjets or scramjets, for example. Ramjets are generally jet engines that utilize a jet's forward motion to compress incoming air, which generally cannot produce thrust at zero airspeed and thus cannot move a jet aircraft from a standstill. A scramjet is a variant of the ramjet in which the combustion process takes place in supersonic airflow.

Rockets generate thrust by expelling mass behind them at high speed. Chemical rockets react propellant and oxidizer, such as liquid oxygen, in a combustion chamber creating a stream of high velocity gas to produce thrust. The current payloads of these vehicles are limited to a great extent by the density and energy content of the propellants.

Specific impulse of a rocket propellant (Isp) is a parameter that relates the thrust generated to the mass flow rate of propellant into the combustion chamber. The ratio is proportional to the square root of the chamber temperature and inversely proportional to the square root of the chamber content molecular weight. Thus, specific impulse increases with increasing chamber temperature (which results in higher chamber pressures) and decreasing molecular weight of combustion products (which achieve higher exhaust velocities than heavier products). Specific impulse is essentially a momentum term. Increasing the mass of fuel burned in a given amount of time or the velocity of the exhaust gases will generally have a beneficial effect on specific impulse. Higher specific impulses are desirable since greater thrusts are generated for a given weight of fuel combusted. The result is that a greater payload can be lifted into orbit or a higher orbit can be achieved than would otherwise be possible.

Many of the current users of propellant use a propellant that meets the "RP-1" specification (hereinafter referred to as an "RP-1 propellant"). Other users that are more sensitive to sulfur content require the use of a propellant that meets the RP-2 specification. Certain relevant chemical and physical property specifications for RP-1 and RP-2 propellants are shown in Table 1 below.

**TABLE 1**

| Property | RP-1 Limit | RP-2 Limit | ASTM Method |
|---|---|---|---|
| Fuel Evaporated 10% | 185-210 (°C) | 185-210 (°C) | |
| | 365-410 (°F) | 365-410 (°F) | |
| End Point | 273 (°C) | 273 (°C) | D-86 |
| | 525 max (°F) | 525 max (°F) | |
| Specific Gravity 15.5 °C (60°F) | 0.799-0.815 | | D-1298 |
| Sulfur (ppm) | 30 max | 0.1 max | D-5623 |
| Mercaptan Sulfur (ppm) | 3 max | Not Required | D-3227 |
| Freezing Point (°F) | -60 max (-51°C) | -60 max (-51°C) | D-2386 |
| Net Heat of Combustion | 43.031 (MJ/kg) | 43.031 (MJ/kg) | D-240 |
| | 18,500 min (BTU/lb) | 18,500 min (BTU/lb) | |
| Aromatics (vol%) | 5 max | 5 max | D-1319 |
| Olefins (vol%) | 2 max | 2 max | D-1319 |
| Hydrogen content (wt%) | 13.8 min | 13.8 min | D-3343 |
| Flash Point (°F) | 140 min (60°C) | 140 min (60°C) | D-93 |

| | | | |
|---|---|---|---|
| **as reported by the United States Defense Department Specification MIL-DTL-25576E, dated April 14, 2006* | | | |

Traditionally, RP-1 propellants are highly refined kerosene similar to jet fuel. Kerosene is generally obtained from the fractional distillation of petroleum between 140°C and 250°C, resulting in a mixture of molecules with carbon chains lengths between 10 and 25 carbon atoms. For example, RP-1 propellants may have an average molecular weight of about 175, a density of about 0.82 g/ml and a boiling point range of from 350°F (176°C) to 525°F (273°C). Theoretically, nearly any petroleum crude oil can produce some RP-1 propellants with enough processing; however, in practice, the fuel is typically sourced from a small number of oil fields with high-quality base stock due to the costs and difficulty involved in refining lesser-quality crudes.

Unlike traditional methods of manufacturing RP-1 propellants, the propellants of the present invention are formulated by blending one or more hydrocarbon fluids to form formulated propellants.

As used herein, the term "hydrocarbon fluids" is used in a generic sense to describe a wide range of materials used in an equally wide range of applications. The hydrocarbon fluids generally utilized for the formulated propellants described herein may be produced by a number of processes. For example, hydrocarbon fluids can be produced from severe hydrotreating, deep hydrotreatment or hydrocracking to remove sulfur and other heteroatoms or polymerization or oligomerization process, such processes being followed by distillation to separate them into narrow boiling ranges. In some cases there may be additional steps, such as chemical or physical separation in order to concentrate a stream into isoparaffins or paraffins. Further, isoparaffins derived from oligomerization may constitute hydrocarbon fluids.

Certain hydrocarbon fluids are described in U.S. Pat. No. 7,311,814 and U.S. Pat. No. 7,056,869. Unlike fuels, hydrocarbon fluids tend to have a narrow boiling point range, *e.g.,* less than 500°F (260°C), or 300°F (148°C) or 100°F (37°C), for example. Such narrow cuts provide a narrower flash point range and provide for tighter viscosity, improved viscosity stability and defined evaporation specifications, as shown by the distillation curve, for example.

In certain embodiments, the hydrocarbon fluids may be produced by hydrocracking a vacuum gas oil distillate followed by fractionating and/or hydrogenating the hydrocracked vacuum gas oil. Such fluids may have an ASTM D86 boiling point range of from 212°F (100°C) to 752°F (400°C), wherein the individual hydrocarbon fluids may have the narrower boiling ranges described herein. The fluids may further have a naphthenic content of at least 40 wt.%, or 60 wt.% or 70 wt.%, for example. The fluids may further have an aromatics content of less than 2 wt.%, or 1.5 wt.% or 1.0 wt.%, for example. The fluids may further have an aniline point below 212°F (100°C), or 205°F (96°C) or 200°F (93°C), for example.

In certain embodiments, the hydrocarbon fluids have low sulfur concentrations e.g., less than 30 ppm, or less than 15 ppm or less than 3 ppm, aromatics contents that are below 1.0 vol.%, or 0.5 vol.% or 0.01 vol.%, for example, relatively high net heats of combustion, and narrow distillation ranges. Further, depending on how the hydrocarbon fluid is processed and produced, the hydrocarbon fluid may be further characterized as predominantly paraffinic, isoparaffinic, or naphthenic (e.g., greater than 40 wt.%, or 50 wt.% or 60 wt.% or 80%). While such characterization may be helpful in blending to achieve very low densities and/or high net heats of combustion, such characterization is not a necessary condition for formulation of propellants.

Some illustrative, non-limiting chemical and physical property ranges characterizing various hydrocarbon fluids are shown in Table 2 below.

**TABLE 2**

| Property | Range | ASTM Method |
|---|---|---|
| End Point (°F) | 250-600 or <525 (121-315°C or <273°C) | D-86 |
| Specific Gravity 15.5°C (60°F) | 0.760-0.825 or 0.79-0.81 | D-1298 |
| Sulfur (ppm) | 0.1-5.0 or <3 | D-5623 |
| Mercaptan Sulfur (ppm) | <1 or <0.5 | D-3227 |
| Freezing Point (°F) | -120 to -40 (-84 to -40°C) | D-2386 |
| Net Heat of Combustion | >42.449, >43.263>, 43.612 (MJ/kg) >18,250,>18,600,>18,750 (BTU/lb) | D-240 |
| Aromatics (vol%) | 0-1.0 | D-1319 |
| Olefins (vol%) | 0-0.1 | D-1319 |
| Hydrogen content (wt%) | 13.0-15.3 | D-3343 |
| Flash Point (°F) | 130-225, >140 (54-107°C, >60°C) | D-93 |

The hydrocarbon fluids can be derived from any suitable starting material that can result in materials that meet the final use requirements. It is to be noted that starting materials need not fall into final product boiling range, as in the gas oil case stated above. Thus, starting materials for production of hydrocarbon fluids can be gas oils or other high molecular weight material (that are further hydrocracked to lower molecular weight materials or deep hydrotreated to decrease sulfur content, materials that are normally classified as distillates, such as kerosene, straight run diesel, ultralow sulfur diesel, coker diesel (with sufficient hydroprocessing), or light cycle oil from FCC units, for example. Starting materials can be kerosene or gas oils from Gas to Liquid process or from biomass conversion processes. After sufficient hydroprocessing to remove oxygen, in certain embodiments, biodiesel and biojet are used as starting materials.
Typically, biodiesel and biojet are hydroprocessed to remove oxygen. In certain embodiments, triglycerides that, after processing yield a carbon chain in the C12 to C18 range, are used as starting materials. Biodiesel and biojet may be plant or animal sourced. Additionally, the starting materials may be olefins to produce the hydrocarbon fluids, olefins being polymerized or oligomerized. In one or more embodiments, the starting materials may include propene, butene or combinations thereof, for example. Olefins may be produced from traditional sources such as a naphtha cracker. Alternatively, in certain embodiments of the present disclosure, olefins are produced from dehydration of low carbon number alcohols. Low carbon number alcohols may be produced through various biomass fermentation processes. In certain embodiments, hydrocarbon fluids can include gas oil, kerosene, straight run diesel, ultralow sulfur diesel, coker diesel, light cycle oil, hydrodewaxed gasoil or kerosene cuts, ethylene, propene, butene or combinations thereof.

In one or more embodiments, the hydrocarbon fluids are generally components selected from C₉-C₁₈ or narrower distillation cuts. Specific, non-limiting, examples of distillation cuts characterizing hydrocarbon fluids that may be blended to form the formulated propellant include SPIRDANE® (*e.g*., D-40 having a density of about 0.790 g/mL, a boiling range of 356°F-419°F (180-215°C), flash point of 107.6°F (42°C) and D-60 having a density of about 0.770 g/mL, a boiling range of 311°F-392°F (155-200°C), flash point of 145°F (62°C)), KETRUL® (e.g., D-70 having a density of about 0.817 g/mL, a boiling range of 381°F-462°F (193-238°C), flash point of 160°F (71°C) and D-80 having a density of about 0.817 g/mL, a boiling range of 397°F-465°F (202-240°C), flash point of 170.6°F (77°C)), HYDROSEAL® (e.g., G 232 H) and ISANE IP® fluids, commercially available from TOTAL FLUIDES, S.A., ISOPAR™ fluids, commercially available from ExxonMobil Chemical Corp. and IP2835, commercially available from Idemitsu Corp.

With the information and methods provided in this disclosure, it is possible to formulate a propellant with particular desired characteristics by blending hydrocarbon streams. The formulated propellants include two or more hydrocarbon fluids. For example, in some embodiments, the formulated propellant includes two hydrocarbon fluids. In other embodiments, the formulated propellant includes three hydrocarbon fluids. In still other embodiments, the formulated propellant includes four hydrocarbon fluids. Individual hydrocarbon fluids are chosen for formulation into propellants depending on how each contributes to the final properties of a rocket fuel blend.

In one or more embodiments, the formulated propellant is formulated to exhibit a particular distillation curve or aspects of a particular distillation curve. For instance, the formulated propellant is designed to have a front end within the fuel evaporated limits designated in Table 1 and an endpoint at or below the temperature of the endpoint specified in Table 1. In such an instance, a plurality of hydrocarbon fluids may be blended to create a formulated propellant that meets the RP-1 specifications for "fuel evaporated" and "end point."

It is not necessary for the individual hydrocarbon fluids that are to be blended to each have particular fluid characteristics, such as end point or fuel evaporated, within the specification desired. That is, the formulated propellant may be formulated from a broad spectrum of hydrocarbon fluids that in and of themselves do not meet the desired specification. Further, known jet fuel formulations may be incorporated with the hydrocarbon fluid. By utilizing such combinations, a broader tailored property distribution is achievable. For example, a specific, non-limiting formulated propellant may be formed of a first hydrocarbon fluid having an end point higher than the desired specification while a second hydrocarbon fluid may have an end point below that of the desired specification to achieve a blend that has an end point that falls within the desired specification. Further, by selecting the individual hydrocarbon fluids, it may be possible to replicate a desired distillation curve within an acceptable margin.

While in certain circumstances a single hydrocarbon fluid may be used as a propellant, such as one that falls within or overlaps the distillation range for a particular propellant specification, such as RP-1, the combination of two or more fluids results in greater flexibility in how closely it is possible to match the entirety of the desired distillation curve. For instance, when matching two points within the specification for RP-1 propellant distillation curves, for example the 10% and final point, it may not be necessary to match the entire RP-1 propellant curve to be within the specification. However, by combining two or more hydrocarbon fluids, it is possible to achieve a formulated propellant that more closely matches the desired distillation curve, thereby improving performance or standardizing performance, for instance.

In addition to blending hydrocarbon fluids to reach certain points on a distillation curve, such as the fuel evaporated 10% and endpoint, hydrocarbon fluids may be blended to achieve numerous other characteristics. For instance, hydrocarbon fluids may be blended to achieve formulated propellants with certain cold flow properties such as pour point, cloud point, freeze point and viscosity. In other embodiments, hydrocarbon fluids may be blended to achieve certain propellant performance characteristics, such as density, hydrogen content, and net heat of combustion.

As an example, in some embodiments, hydrocarbon fluids that have a flash point below the RP-1 propellant specification of 140°F (60°C) may be used in the formulation, but only in amounts that do not reduce the flash point of the final blend below the specification. Similarly, fluids with freeze points above the -60°F (-51°C) maximum specification, such as those with a minor amount of aromatics, may be included in the blend as long as the final freeze point is below the RP-1 propellant specification value.

The use of hydrocarbon fluids from which aromatics have been reduced/removed yields another benefit to the propellant. In certain embodiments, the reduced amount of aromatics in the hydrocarbon fluid components leads to a higher net heat of combustion for the hydrocarbon fluids components used as blend stock. In certain embodiments, the combination of these high net heat of combustion hydrocarbon fluids results in a product that exceeds the 43.031 MJ/kg (18,500 BTU/pound) minimum specification of RP-1 propellant. In certain embodiments of the present disclosure, the net heat of combustion is from 43.031 MJ/kg to 44.194 MJ/kg (18,500 BTU/pound to 19,000 BTU per pound) as measured by ASTM D-240. In other embodiments of the present disclosure, the net heat of combustion is between 43.496 MJ/kg to 43.961 MJ/kg (18,700 BTU/pound to 18,900 BTU/pound) as measured by ASTM D-240. Further, the use of hydrocarbon fluids from which aromatics have been removed or reduced may also increase hydrocarbon content of the formulated propellant.

In addition, isoparaffinic blend stocks may help to raise the net heat of combustion when included in the blend, as such blend stocks' net heat of combustion is greater than aromatics or naphthenics that are characterized by the same carbon number. Normal paraffin blend stock may also raise the net heat of combustion.

Different blend stocks may have different rates of combustion. Typically, designers of rocket engines prefer a particular range or rate of combustion in order to make sure the flame front propagates through the rocket engine at a desired rate. A rate of combustion that is too fast may result in combustion completion before the desired point in the engine. A rate of combustion that is too slow may result in the opposite problem. Typically, normal paraffins have a very high rate of combustion. Isoparaffins typically have a lesser rate of combustion. In certain embodiments of the present disclosure, the isoparaffin/paraffin ratio of the blend stocks are controlled to achieve an optimized rate of combustion for the formulated propellant.

Density is an important parameter of the propellant as it determines the weight of the fuel that must be lifted by the vehicle. Within the framework of the desired distillation curve, hydrocarbon fluids may be chosen to alter the density of the final blend. For example, naphthenic based fluids will tend to raise the final density while isoparaffinic fluids tend to reduce the density of the final product. Materials that contain a significant amount of naphthenes and are at the high end of the distillation curve relative to a propellant specification such as RP-1, such as HYDROSEALS®, can be used to increase the density of the blended product. In the present disclosure, the density at 15°C is between 0.799-0.815, between 0.81 to 0.8135, as measured by D-1298.

Accordingly, one or more embodiments utilize isoparaffin hydrocarbon fluids as at least one of the two or more hydrocarbon fluids. In one or more embodiments, the propellant may include a first hydrocarbon fluid having a density greater than 0.8 g/ml and a second hydrocarbon fluid having a density less than 0.8 g/ml, for example. The formulated propellants may have a weight that is about 5%, or 7% or 9% less than the weight of the RP-1 propellant, for example.

Hydrogen content of the propellant has a significant effect on the performance of the propellant. Generally, the higher the hydrogen content, the higher the Isp of the propellant. In certain embodiments, in order to keep the exhaust molecular weight low, the rocket engine is run slightly fuel rich to produce CO rather than CO₂ as a combustion product. As the hydrogen content is increased, the amount of oxidizer needed (the mixture ratio) to combust the propellant also may increases because more atoms are present for a given carbon number compound. Specifically, an increase in the fuel hydrogen to carbon ratio results in a stoichiometric oxygen to fuel ratio increase. Thus, more moles of gas are expelled from the exhaust nozzle as combustion products. When those additional moles of gas are water, the average molecular weight of the exhaust gas goes down. Additionally, a significant amount of molecular fragments of OH and hydrogen atoms are formed and ejected from the combustion chamber. The proportion of these also may increase with an increase in hydrogen to carbon ratio and further reduce the average molecular weight of the exhaust gas.

In certain embodiments of the present disclosure, the hydrogen content of the formulated propellant is controlled by increasing the ratio of hydrogen of carbon atoms of the molecules of the hydrocarbon fluid blend stocks. For instance, reducing rings and branching and increasing the degree of hydrogen saturation of hydrocarbon molecules increases the hydrogen:carbon atom ratio, thereby increasing hydrogen content of the propellant. Removing or reducing aromatics in the hydrocarbon fluid blend stocks may result in a significant increase in hydrogen content. Hydrogen content in certain embodiments of rocket propellant of the present disclosure are from 14.25 - 15 wt%, from 14 - 14.8 wt%, less than 15.3 wt%, and between 14.8 and 15 wt% as measured by ASTM D-3343

Typically, the hydrocarbon fluids used in the blended formulated propellant have very low sulfur concentration, Sulfur adversely affects propellant performance in a number of ways, including reducing the net heat of combustion and increasing fouling. Therefore in some embodiments, the formulated propellants include significantly reduced sulfur contents compared to conventional RP-1 propellants. For example, the formulated propellants may include less than 30 ppm or less than 5ppm sulfur. In other embodiments, the formulated propellants contain less than 3 ppm sulfur or less than 1 ppm sulfur.

Due to the significant absence of olefins and aromatics from the formulated propellant, the formulated propellants exhibit improved thermal stability over a traditionally manufactured RP-1 propellant. Engines utilized in the vehicles described herein may include cooling coils around an exhaust nozzle through which fuel from tanks flows prior to injection into a combustion chamber. The cooling coils periodically foul, in large part due to aromatics and/or olefins present in the propellant. Accordingly, the formulated propellants provide a fuel that may allow reuse of booster stage rocket motors due to significantly reduced, if not eliminated, cooling coil fouling, for example.

Traditionally manufactured RP-1 propellant may be used in both the booster stage and in upper stages. However, it is more common for upper stages to include or entirely use higher energy fuels because of density and performance issues with RP-1. As one of ordinary skill in the art can appreciate with the benefit of this disclosure, by manipulating the performance parameters of the formulated propellant, formulated propellants consistent with this disclosure may be used in upper stages, either alone, or in combination with higher energy fuels. In certain embodiments of the present disclosure, the formulated propellant may be combined with powdered metal capable of forming a metal oxide in order to achieve a higher level of specific impulse. One example of such a metal is aluminum.

The formulated propellants of the present disclosure overcome problems of certain traditional RP-1 propellants' availability/performance by blending existing hydrocarbon fluids to produce a propellant at least equal in properties and cost, if not superior to, traditionally manufactured RP-1 propellants. Further, the formulated propellants of the present disclosure can be tailored to provide properties such as density, hydrogen content, and heat of combustion while exhibiting the ability to maintain a higher level of specific impulse (Isp) than that available with conventionally manufactured RP-1.

It is further contemplated that the formulated propellant may contain various additives, such as dyes, antioxidants, metal deactivators, and combinations thereof, for example.

### Examples

A sample of traditionally manufactured RP-1 propellant and samples of various formulated propellants were analyzed by D-86, density, aniline point, cloud point, sulfur content, and aromatics content by FIA. The distillation curve and density were used to calculate hydrogen content by ASTM D-3343. The distillation curve, density, aniline point, sulfur content, and aromatics content were used to calculate the net heat of combustion by ASTM D-4529. As a basis for comparison, a sample of traditionally manufactured RP-1 propellant was obtained and analyzed, with results illustrated in the data below. The density was measured at 15°C, as required by ASTM D-4529, which is an estimation of the net heat of combustion. Subsequent density measurements made on formulated propellants were done on the same basis. The latter was used to calculate the net heat of combustion.

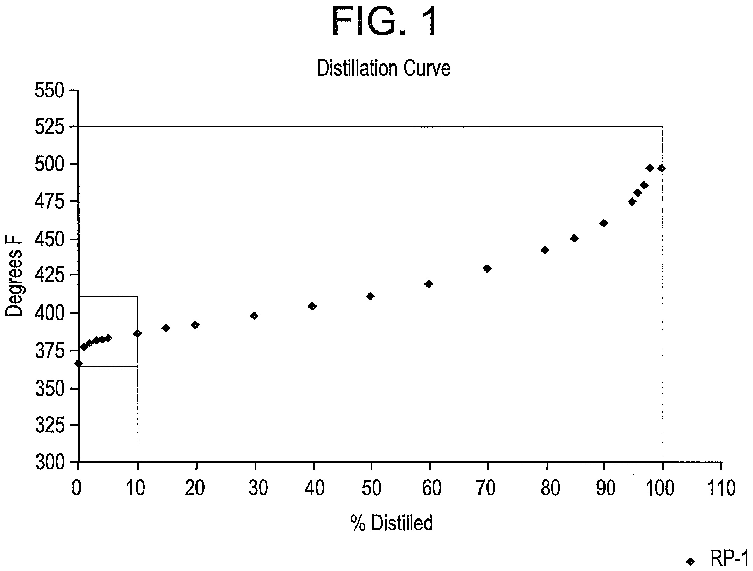

For the traditionally manufactured RP-1 propellant, sulfur content was well below the 30 ppm maximum. Cloud point was measured instead of freeze point (the latter being at a lower temperature than the former). The hydrogen content was calculated using the empirical formulas in ASTM D-3343, which utilizes the density, distillation curve, and aromatics content. The value was 14.27%, surpassing the specification of 13.8% (wt). Further, there was a small amount of aromatics and olefins present, 1.22 and 1.10% (vol), respectively, which slightly reduce the hydrogen content. The theoretical maximum hydrogen content for a C₁₂-C-₁₈ kerosene cut is between 14.9 and 15.3%. As a highly hydrotreated kerosene, the traditionally manufactured RP-1 propellant would also be characterized by the presence of naphthenic rings. Its hydrogen content of 14.3% was consistent with a single naphthenic ring per molecule. The traditionally manufactured RP-1 propellant distillation curve is shown in Figure 1. The lines were inserted to show the distillation curve specifications for RP-1 propellant. The 10% point must be reached between 365°F (185°C) and 410°F (210°C) and the end point must be below 525°F (273°C) for RP-1 specifications. As stated above, traditionally manufactured RP-1 propellant is a narrow cut consisting of carbon number compounds ranging from C₁₂ to C₁₈. The gradual increase in temperature with percent distilled is indicative of a complex mixture of multiple carbon number compounds.

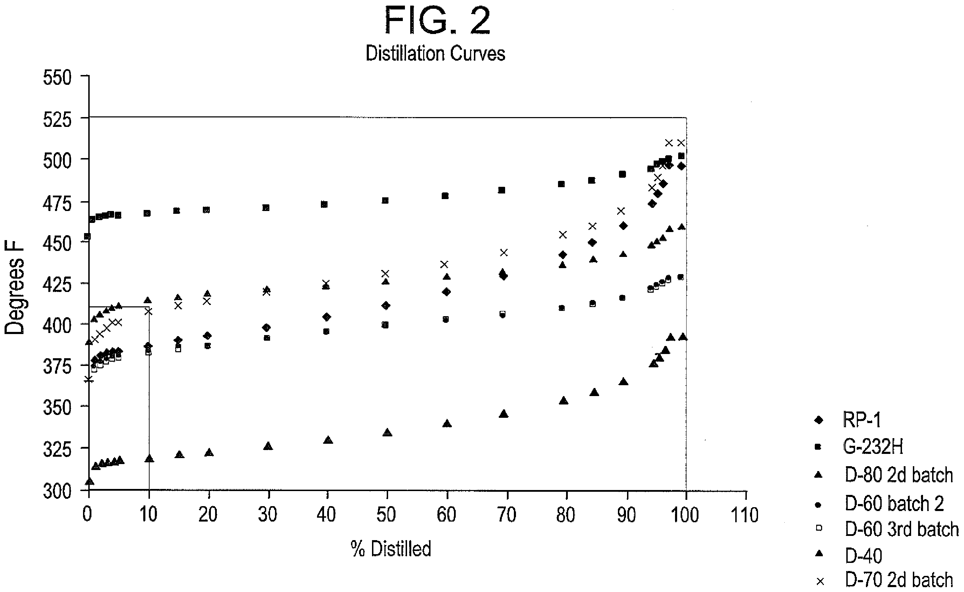

The materials analyzed for use in the formulated propellants were SPIRDANE® D-40, SPIRDANE® D-60, KETRUL® D-70, KETRUL® D-80, HYDROSEAL® G 232 H, ISANE IP®175, and ISANE IP®185. The distillation curves for these components are shown in Figure 2. Data is shown relative to the distillation curve for the traditionally manufactured RP-1 propellant. None of the individual components was a close enough match to the traditionally manufactured RP-1 propellant to be used "as is," *i.e.* without formulation. The components were either higher boiling, as was the G 232H, lower boiling, like the D-60, or characterized by a narrower boiling range, like the D-80. However, this combination of attributes for the blend components allows flexibility in blending as the front, middle, and back end of the distillation curve for the propellant can be tailored to match the RP-1 specification. Alternatively, various characteristics of the propellant relating to the distillation curve or other properties can be optimized through the appropriate selection of components for blending.

The density measurements for all components excluding the ISANE IP® materials were close to that of the traditionally manufactured RP-1 propellant. ISANE IP® materials were characterized by a lower density than that of the traditionally manufactured RP-1 propellant. The net heats of combustion and hydrogen content for those components, including ISANE IP® materials, were comparable to the traditionally manufactured RP-1 propellant.

Once component data was compiled, the formulated propellants were made. A number of prototype blends were made to gauge how the components affected each other in combination. Three prototypes which are not part of the present invention were made and designated proto-6, proto-7, and proto-8. Proto-6 was designed to match the RP-1 specification. Proto-7 and proto-8 were designed to be lower boiling and higher boiling than the RP-1 specification, on average, respectively. The latter two were made to determine what range of density and other properties would be achievable with the current blend components, such as SPIRDANE®, KETRUL®, and HYDROSEAL® based materials if the limits of the distillation curve were pushed. Blend formulations for the prototypes are shown in Table 3.

**TABLE 3**

| Blend Formulation | D-60 (vol%) | D-70 (vol%) | D-80 (vol%) | G232H (vol%) |
|---|---|---|---|---|
| Proto-6* | 70 | 5 | 0 | 25 |
| Proto-7* | 90 | 5 | 0 | 5 |
| Proto-8* | 45 | 0 | 10 | 45 |

| | | | | |
|---|---|---|---|---|
| *not part of the invention | | | | |

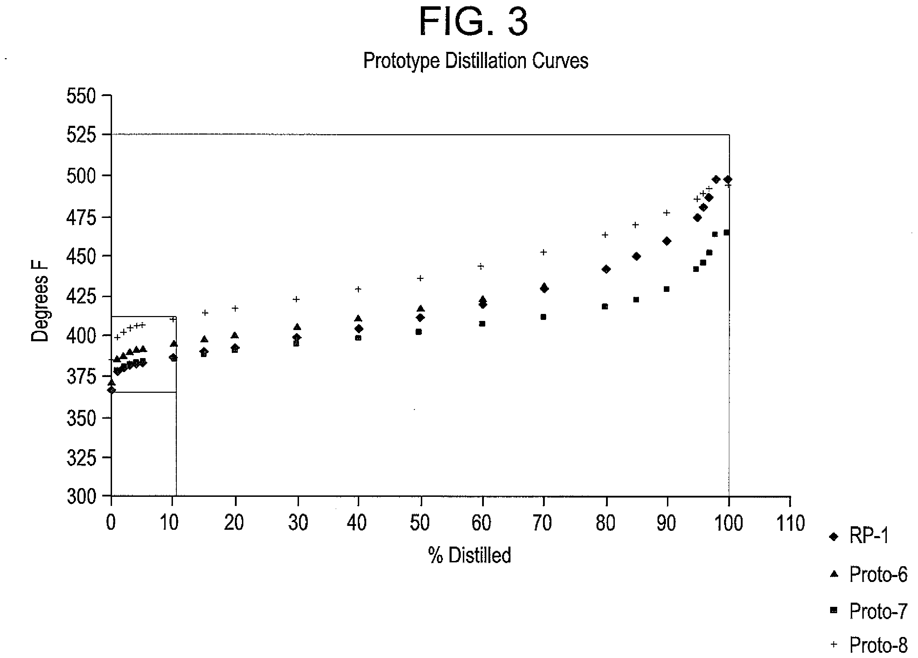

The distillation curve data for proto-6, proto-7, proto-8 and traditionally manufactured RP-1 propellant is shown in Figure 3. With specifications only at the 10% and the endpoint, there is wide latitude in the distillation curve that will meet the RP-1 specification. All three prototypes met this specification. Proto-8, designed to be high boiling on average, had a 10% point at 410°F, matching the limit of the specification. All three had end points below the 525°F (273°C) maximum. Proto-7 was significantly below it at 465°F (240°C), by design.

A high concentration of the light D-60 component reflected in the position of the proto-7 distillation curve below all others tested. Similarly, the high concentration of the heavy component G232H raised the proto-8 distillation curve above all the others.

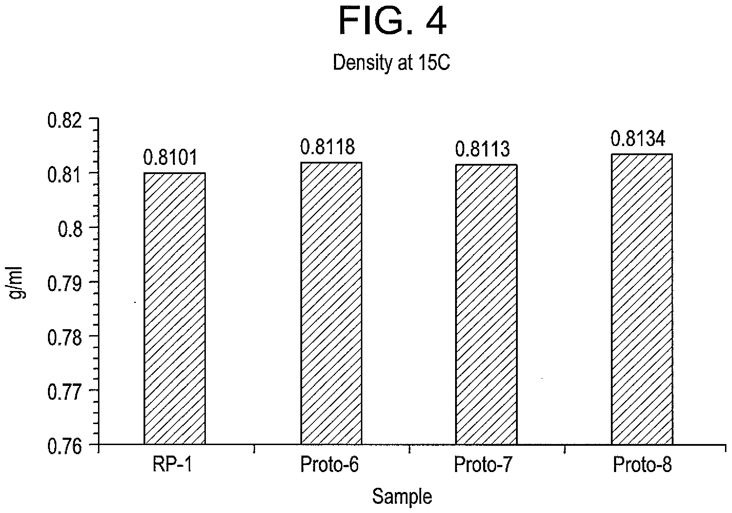

Cloud point data for all formulations was below the freeze specification of -60°F (-51°C) indicating that all have an acceptable freeze point. The sulfur content of the traditionally manufactured RP-1 propellant was measured at 1 ppm by wavelength dispersive x-ray fluorescence, as noted earlier. Prototype formulations were at the limit of detection for that method with measurements at 0.5-0.6 ppm. These values are very close to the 0.1 ppm max limit for an RP-2 formulation. The density measurements were very close to that of the traditionally manufactured RP-1 propellant, albeit slightly higher, but still within the RP-1 specification. This was consistent with the density of the blend stocks that were slightly above that of the traditionally manufactured RP-1 propellant. The density measurements are compared in Figure 4.

ISANE IP®175 and 185 are characterized by densities significantly lower than the traditionally manufactured RP-1 propellant, but have flash points that are at or above that of the RP-1 specification. The density of each of these was below 0.77 g/ml, a significant reduction relative to other blend components and the traditionally manufactured RP-1 propellant. Additionally, the hydrogen content was measured between 15.1 and 15.2. This is in agreement with the theoretical value for a fully saturated sample with no naphthenic rings in the C₁₂ to C₁₈ range and as reflected by typical values reported on the certificate of analysis for these materials.

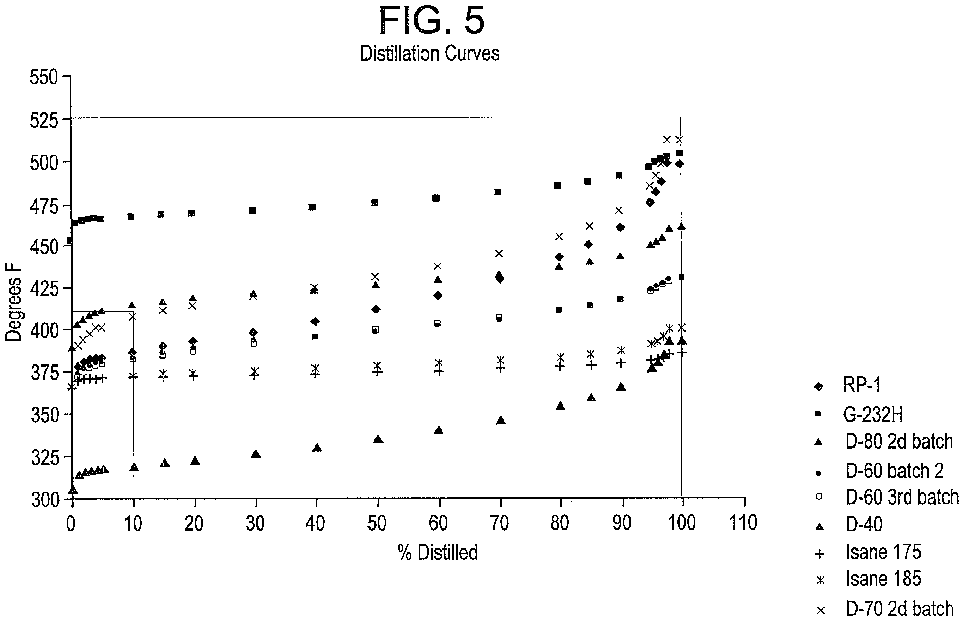

The distillation curve data for traditionally manufactured RP-1 propellant is shown in Figure 5 in comparison with certain hydrocarbon fluids. The new materials are very narrow cuts with end points below 400°F (204°C). This necessitates the use of a middle and heavy cut in order to create an RP-1 propellant formulation. Additionally, the front end of the distillation curve was very clean indicating that few very light, low flash point compounds were present making these ideal blend components for the light portion of the formulation. The prototype blends formulated with the new components were designated proto-9 through proto-12. The composition of these blends is shown in Table 4.

**TABLE 4**

| Blend Formulation | D-60 (vol%) | D-70 (vol%) | D-80 (vol%) | G232H (vol%) | ISANE IP 175 (vol%) | ISANE IP 185 (vol%) |
|---|---|---|---|---|---|---|
| Proto-6* | 70 | 5 | 0 | 25 | 0 | 0 |
| Proto- 7* | 90 | 5 | 0 | 5 | 0 | 0 |
| Proto-8* | 45 | 0 | 10 | 45 | 0 | 0 |
| Proto-9 | 0 | 10 | 0 | 30 | 0 | 60 |
| Proto-10 | 0 | 0 | 15 | 20 | 0 | 65 |
| Proto-11 | 0 | 12.5 | 0 | 12.5 | 75 | 0 |
| Proto-12 | 0 | 15 | 0 | 20 | 0 | 65 |

| | | | | | | |
|---|---|---|---|---|---|---|
| * not part of the invention | | | | | | |

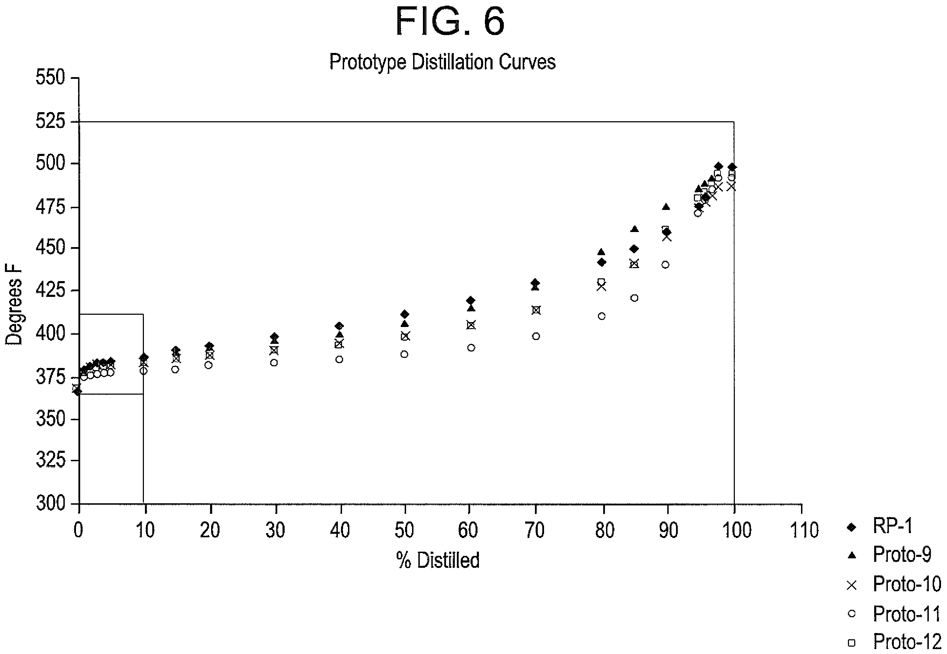

The distillation curves corresponding to the new formulations are shown in Figure 6. Proto-9 matched the traditionally manufactured RP-1 propellant distillation curve closely. Proto-11 was designed to be a low density propellant, as shown by the rather high concentration of ISANE IP®175 in its formulation. Proto-10 and Proto-12 were formulated to contain a greater proportion of middle boiling compounds and examine the difference between the contributions of D-70 versus D-80 to the distillation curve. As shown, the difference was minimal for the quantities used.

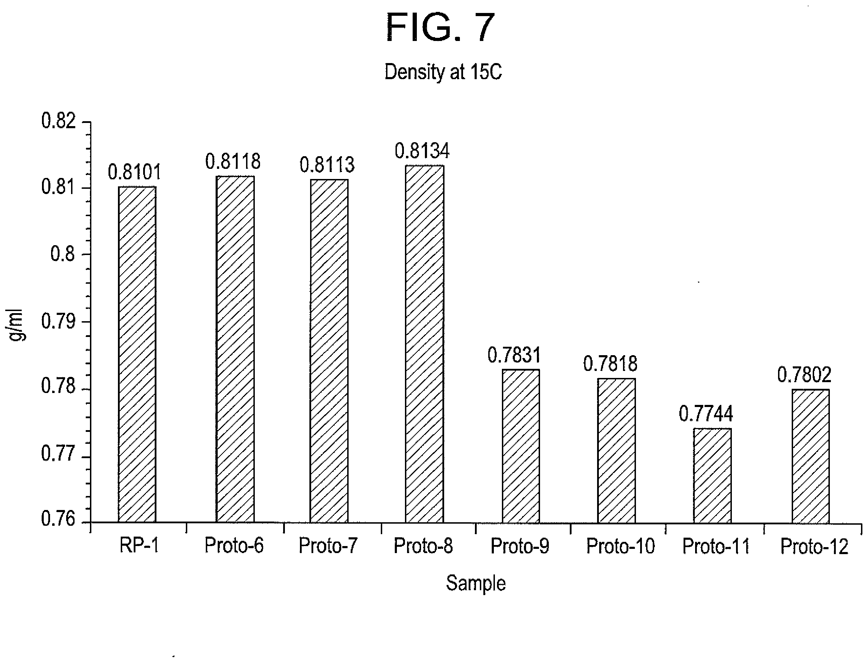

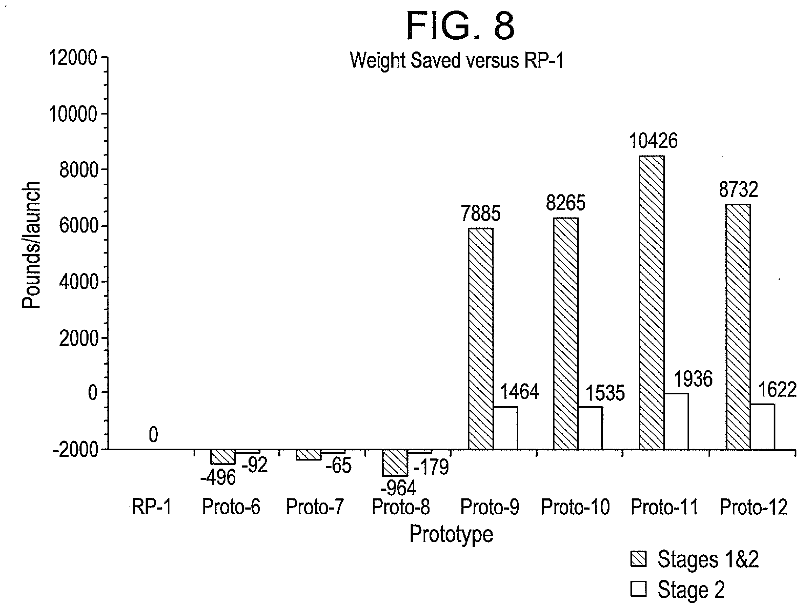

The immediate effect of the presence of replacing the lower boiling components with isoparaffins can be seen on the density measurement in Figure 7. The step change in density is apparent. The low-density blend proto-11 was measured at 0.7744 g/ml. Given a hypothetical two stage vehicle with 108 m³ (28,500 gallons) of fuel in the booster stage and 24.6 m³ (6,500 gallons) in the second stage, the weight saved through use of the low-density prototypes is shown in Figure 8. The upper stage weight savings for proto-9, the distillation curve copy of the traditionally manufactured RP-1 propellant, is nearly 7% of the orbital payload. This savings is about 9% for the low-density proto-11. This is a huge increase in payload.

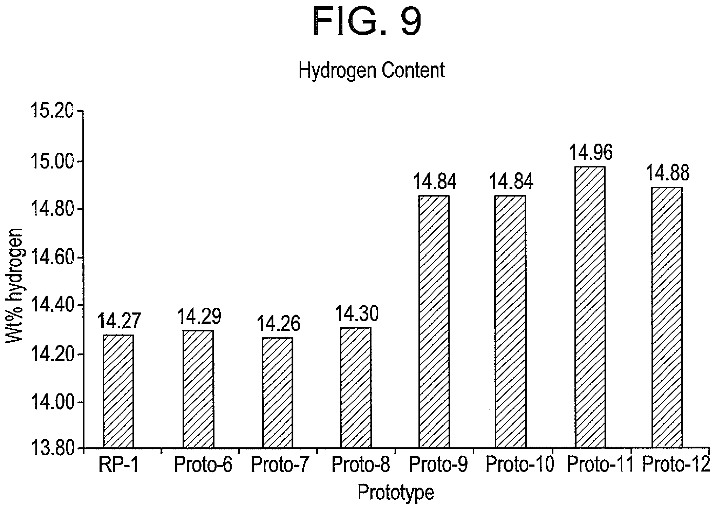

The hydrogen content for the prototypes is shown in Figure 9. Replacing some of the compounds that are naphthenic in nature with the fully saturated isoparaffins resulted in a net increase in hydrogen content to nearly 14.9 for the traditionally manufactured RP-1 propellant copy proto-9 and to 15 for the low-density formulation, proto-11. This was a significant increase relative to the traditionally manufactured RP-1 propellant sample.

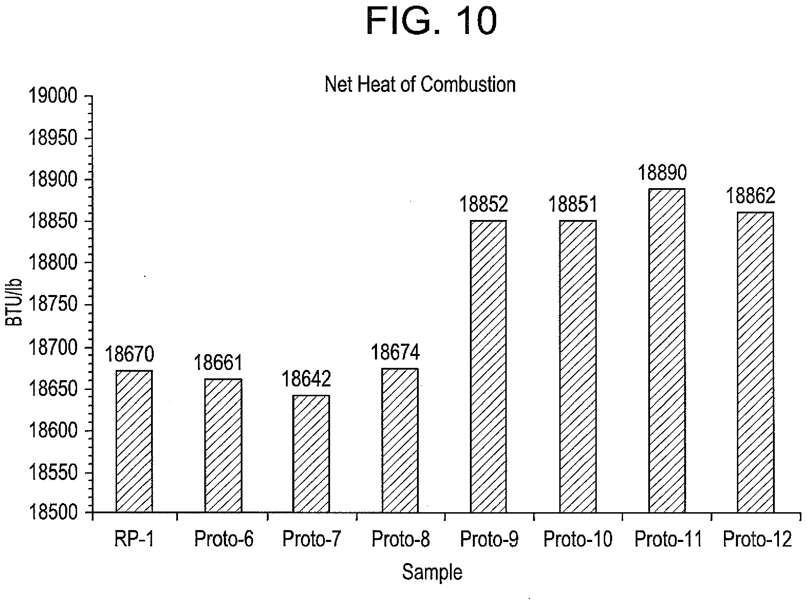

The net heat of combustion for the prototypes is shown in Figure 10.

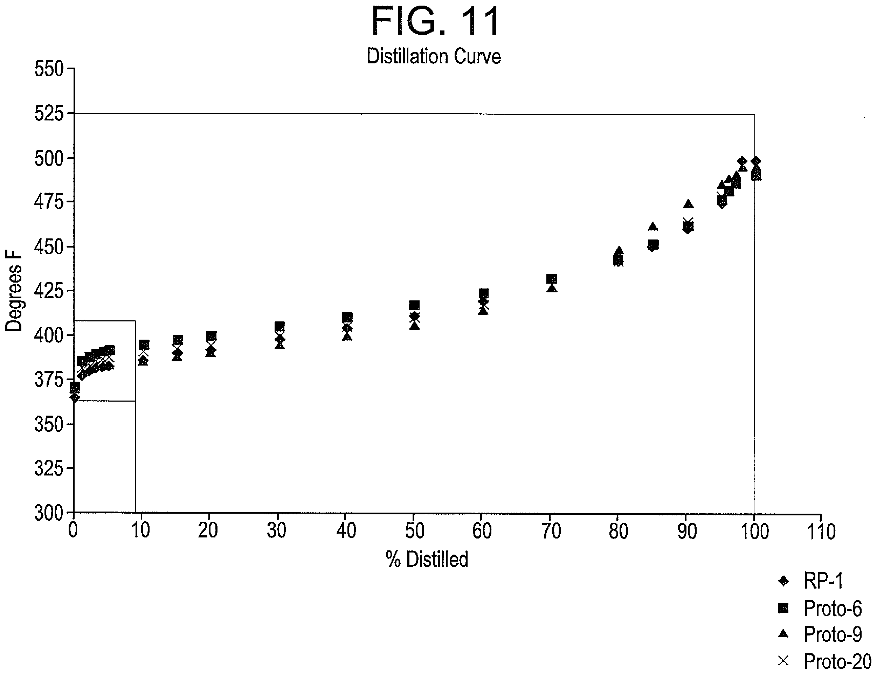

In addition to the above proto- formulations, proto-20 was formulated. Proto-20, like proto-6 and proto-9 was designed to match within reasonable limits the distillation curve associated with traditionally produced RP-1 propellant. FIG. 11 illustrates the distillation curves for all four formulations. However, proto-20 was also designed to provide an intermediate density, hydrogen content, and net heat of combustion between proto-6 and proto-9. Hence, Proto-20 has a density at 15°C of 0.8001, a hydrogen content of 14.51 wt%, and a net heat of combustion of 43.579 MJ/kg (18,736 BTU/lb).

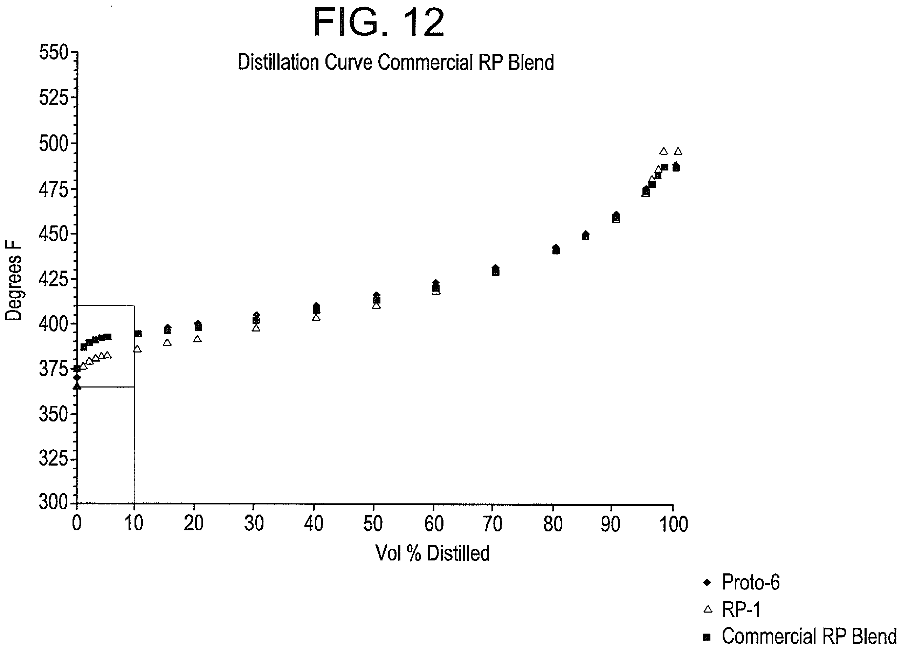

22.7 m³ (Six thousand gallons) of proto-6 were prepared in a commercial scale facility. As shown in FIG. 12, a sample was taken of the proto-6 formulated propellant produced in the commercial scale facility and the distillation curve of the sample (labeled "Commercial RP Blend") was compared to that of traditionally manufactured RP-1 propellant (labeled RP-1) and the lab bench scale formulated proto-6 ("Proto-6"). As shown in Figure 12, the scale up to a commercial scale facility produced nearly an identical distillation curve to what was performed at lab scale. Table 5 provides additional data for these three propellants:

**TABLE 5**

| | | RP-1 | Proto-6 | Commercial Blend |
|---|---|---|---|---|
| Density g.ml at 15C | ASTM D 4052 | 0.8101 | 0.8118 | 0.8120 |
| Sulfur ppm wt | ASTM D 7039 | 1 | 0.6 | <0.5 |
| Cloud Point °C (F) | ASTM D2500 | -87.7°C (-126 F) | -67.2°C (-89 F) | -68°C (-90.4 F) |
| Pour Point °C (F) | ASTM D 97 | -90°C (-130 F) | -72.2°C (-98 F) | -75°C (-103 F) |
| Hydrogen Content wt % | ASTM D 3343 | 14.27 | 14.29 | 14.28 |
| Net Heat Combust. MJ/kg (BTU/lb) | ASTM D 4529 | 43.426 MJ/kg (18670 BTU/lb) | 43.405 MJ/kg (18661 BTU/lb) | 43.377 MJ/kg (18649 BTU/lb) |
| Vis at 20C cSt | ASTM D 445 | | | 2.262 |
| Flash pt °C (F) | ASTM 93 | | | 70°C (158 F) |
| FIA Aromatics vol% | ASTM D 1319 | 1.22 | | Not detected |
| FIA Olefins vol% | ASTM D1319 | 1.10 | | Not detected |

## Claims

1. A method of manufacturing a rocket propellant comprising combining at least two hydrocarbon fluids, wherein at least one of the at least two hydrocarbon fluids contains more than 60 wt.% of isoparaffins, wherein the rocket propellant meets RP-1 specifications as reported by the United States Defense Department Specification MIL-DTL-25576E, dated April 14, 2006.

2. The method of claim 1, wherein the hydrocarbon fluids have a sulfur concentration of less than 3 ppm as measured by ASTM D-5623.

3. The method of claim 1, wherein the hydrocarbon fluids have an aromatics content of less than 1% by volume, as measured by ASTM D-1319.

4. The method of claim 1, wherein the hydrocarbon fluids have an olefins content of less than 0.1% by volume, as measured by ASTM-1319.

5. The method of claim 1, wherein the hydrocarbon fluids have a hydrogen content of from between 13 and 15 wt.%, as measured by ASTM D-3343.

6. The method of claim 1, wherein the hydrocarbon fluids have a flash point of between 54°C (130°F) and 107°C (225°F), as measured by ASTM D-93.

7. The method of claim 1, wherein the rocket propellant has a hydrogen content of from between 14.25 to 15 wt. %, as measured by ASTM D-3343, preferably from between 14.8 to 15 wt. %.

8. The method of claim 1, wherein the rocket propellant has a net heat of combustion greater than 43.031 MJ/kg (18,500 BTU/pound), as measured by ASTM D-240, preferably between 43.031 (18,500) and 44.194 (19,000) MJ/kg (BTU/pound).

9. The method of claim 1, wherein at least one of the hydrocarbon fluids comprises a normal paraffin.

10. The method of claim 1, wherein none of the hydrocarbon fluids meet the RP-1 specification as reported by the United States Defense Department Specification MIL-DTL-25576E, dated April 14, 2006.

11. The method of claim 1, wherein the rocket propellant further comprises a powdered metal, and preferably the powdered metal is aluminum.

## Patentansprüche

1. Verfahren für die Herstellung eines Raketentreibstoffs, umfassend Kombinieren von mindestens zwei Kohlenwasserstofffluiden, wobei mindestens eines der mindestens zwei Kohlenwasserstofffluide mehr als 60 Gew.-% Isoparaffine enthält, wobei der Raketentreibstoff den RP-1-Spezifikationen, wie durch die Spezifikation MIL-DTL-25576E mit Datum vom 14. April 2006 des Verteidigungsministeriums der Vereinigten Staaten berichtet, entspricht.

2. Verfahren nach Anspruch 1, wobei die Kohlenwasserstofffluide eine Schwefelkonzentration von weniger als 3 ppm, wie ASTM D-5623 entsprechend gemessen, aufweisen.

3. Verfahren nach Anspruch 1, wobei die Kohlenwasserstofffluide einen Aromatengehalt von weniger als 1 Volumen-%, wie ASTM D-1319 entsprechend gemessen, aufweisen.

4. Verfahren nach Anspruch 1, wobei die Kohlenwasserstofffluide einen Olefingehalt von weniger als 0,1 Volumen-%, wie ASTM-1319 entsprechend gemessen, aufweisen.

5. Verfahren nach Anspruch 1, wobei die Kohlenwasserstofffluide einen Wasserstoffgehalt zwischen 13 und 15 Gew.-%, wie ASTM-D-3343 entsprechend gemessen, aufweisen.

6. Verfahren nach Anspruch 1, wobei die Kohlenwasserstofffluide einen Flammpunkt zwischen 54°C (130°F) und 107°C (225°F), wie ASTM D-93 entsprechend gemessen, aufweisen.

7. Verfahren nach Anspruch 1, wobei der Raketenbrennstoff einen Wasserstoffgehalt zwischen 14,25 und 15 Gew.-%, wie ASTM D-3343 entsprechend gemessen, bevorzugt zwischen 14,8 und 15 Gew.-% aufweisen.

8. Verfahren nach Anspruch 1, wobei der Raketenbrennstoff eine Nettoabbrandhitze von über 43,031 MJ/kg (18,500 BTU/Pfund), wie ASTM D-240 entsprechend gemessen, bevorzugt zwischen 43,031 (18.500) und 44,194 (19.000) MJ/kg (BTU/Pfund) aufweist.

9. Verfahren nach Anspruch 1, wobei mindestens eines der Kohlenwasserstofffluide ein normales Paraffin umfasst.

10. Verfahren nach Anspruch 1, wobei keines der Kohlenwasserstofffluide der RP-1-Spezifikation, wie durch die Spezifikation MIL-DTL-25576E mit Datum vom 14. April 2006 des Verteidigungsministeriums der Vereinigten Staaten berichtet, entspricht.

11. Verfahren nach Anspruch 1, wobei der Raketentreibstoff ferner ein pulverförmiges Metall umfasst und das pulverförmige Metall bevorzugt Aluminium ist.

## Revendications

1. Procédé de fabrication d'un propulseur de fusée comprenant la combinaison d'au moins deux fluides hydrocarbonés, dans lequel au moins l'un des au moins deux fluides hydrocarbonés contient plus de 60 % en poids d'isoparaffines, dans lequel le propulseur de fusée satisfait aux spécifications RP-1 telles que rapportées par la spécification du Département de la Défense des Etats-Unis MIL-DTL-25576E, en date du 14 avril 2006.

2. Procédé selon la revendication 1, dans lequel les fluides hydrocarbonés ont une concentration de soufre inférieure à 3 ppm, telle que mesurée conformément à la norme ASTM D-5623.

3. Procédé selon la revendication 1, dans lequel les fluides hydrocarbonés ont une teneur en aromatiques inférieure à 1 % en volume, telle que mesurée conformément à la norme ASTM D-1319.

4. Procédé selon la revendication 1, dans lequel les fluides hydrocarbonés ont une teneur en oléfines inférieure à 0,1 % en volume, telle que mesurée conformément à la norme ASTM D-1319.

5. Procédé selon la revendication 1, dans lequel les fluides hydrocarbonés ont une teneur en hydrogène comprise entre 13 et 15 % en poids, telle que mesurée conformément à la norme ASTM D-3343.

6. Procédé selon la revendication 1, dans lequel les fluides hydrocarbonés ont un point d'éclair compris entre 54°C (130°F) et 107°C (225°F), tel que mesuré conformément à la norme ASTM D-93.

7. Procédé selon la revendication 1, dans lequel le propulseur de fusée a une teneur en hydrogène comprise entre 14,25 et 15 % en poids, telle que mesurée conformément à la norme ASTM D-3343, de préférence comprise entre 14,8 et 15 % en poids.

8. Procédé selon la revendication 1, dans lequel le propulseur de fusée a une chaleur nette de combustion supérieure à 43,031 MJ/kg (18 500 BTU/livre), telle que mesurée conformément à la norme ASTM D-240, de préférence comprise entre 43,031 (18 500) et 44,194 (19 000) MJ/kg (BTU/livre).

9. Procédé selon la revendication 1, dans lequel au moins l'un des fluides hydrocarbonés comprend une paraffine normale.

10. Procédé selon la revendication 1, dans lequel aucun des fluides carbonés ne satisfait à la spécification RP-1 telle que rapportée par la spécification du Département de la Défense des Etats-Unis MIL-DTL-25576E, en date du 14 avril 2006.

11. Procédé selon la revendication 1, dans lequel le propulseur de fusée comprend en outre un métal en poudre, et de préférence le métal en poudre est l'aluminium.
